# FASCICULE DE BREVET EUROPEEN

(11) **EP 2 345 804 B1**
(45) Date de publication et mention de la délivrance du brevet: **05.09.2012**
(21) Numéro de dépôt: 10306441.6
(22) Date de dépôt: 17.12.2010
(51) Int. Cl.: F02B 31/06

(54) **Dispositif d'admission pour moteur à combustion interne**
Zufuhrvorrichtung für Verbrennungsmotor
Intake device for an internal combustion engine

(30) Priorité: 17.12.2009 FR 0959127
(43) Date de publication de la demande: 20.07.2011
(73) Titulaire: Renault s.a.s., 92100 Boulogne-Billancourt (FR)
(72) Inventeur: Mamy, Laurence, 78000 Versailles (FR)

(56) Documents cités:
- EP-A2- 1 323 915
- EP-A2- 1 632 659
- WO-A2-2007/132311
- US-B1- 7 128 050

## Description

La présente invention concerne le domaine des moteurs à combustion interne des dispositifs d'admission pour moteurs à combustion interne.

Généralement, un dispositif d'admission comprend un canal d'admission pour amener un mélange explosif, composé généralement d'air et d'un combustible, jusqu'à une chambre de combustion, via un passage terminal dans lequel est installée au moins une soupape d'admission.

Pour ces moteurs, on cherche à générer une aérodynamique structurée de type « tumble », de façon à la dégrader le plus tardivement possible en turbulence. L'exploitation de cette turbulence au moment de l'allumage permet de bénéficier de vitesses de combustion plus importantes en charge partielle et par conséquent, accroît le potentiel de dilution avec des gaz brûlés résiduels dans la chambre, qui se traduit directement par un gain en matière de consommation. Pour les pleines charges à bas régime, la combustion plus rapide permet de fonctionner en sous-avance tout en repoussant le moment d'apparition du cliquetis. En revanche, à haut régime, on cherche à remplir au maximum le moteur afin de ne pas réduire les performances du moteur. C'est pourquoi on fait appel à une aérodynamique variable qui permet de générer, lorsqu'on le souhaite, un écoulement tourbillonnaire dit « tumble ». La génération de cette aérodynamique affecte cependant la perméabilité. Il est donc nécessaire de trouver un compromis entre l'écoulement tourbillonnaire de type « tumble » et la perméabilité.

Il a déjà été proposé de disposer dans le canal d'admission une plaque qui s'étend selon la direction générale de l'écoulement. Une telle disposition est décrite dans les documents FR 2888288 et JP 2008/075509, et EP 1632659 A.

Dans le document US 5803045, est proposée une plaque mobile verticalement et, dans le document JP 2003/106158, est proposée une plaque pivotante dont l'axe est placé en bas du canal d'admission, pour, à volonté, obstruer partiellement une partie inférieure du canal d'admission ou libérer totalement ce dernier.

La présente invention a pour but de proposer des moyens permettant l'obtention d'une aérodynamique variable dans un conduit d'admission.

La présente invention a pour objet un moteur à combustion interne comprenant un dispositif d'admission qui présente un canal d'admission pour amener un mélange combustible dans une chambre de combustion et qui comprend un volet pivotant disposé dans le canal d'admission.

Selon l'invention, ledit volet peut comprendre une plaque principale montée pivotante selon un axe de pivotement transversal au canal d'admission et une plaque secondaire d'extrémité montée pivotante sur la plaque principale selon un axe parallèle à l'axe de pivotement de la plaque principale.

Ledit volet peut être déplacé entre une position d'ouverture et une position de fermeture partielle du canal d'admission telles que, dans la position d'ouverture, la plaque principale et la plaque secondaire s'étendent dans le prolongement l'une de l'autre parallèlement à la direction du canal d'admission et divisent ce dernier en deux sections d'écoulement, et, dans la position de fermeture partielle, la plaque principale obstrue l'une de ces sections d'écoulement et la plaque secondaire vient en appui contre la paroi du canal d'admission.

Ledit volet, en position d'ouverture, peut s'étendre vers l'amont.

La plaque principale dudit volet, en position de fermeture partielle, peut être inclinée, depuis son axe de pivotement, vers l'amont par rapport à la direction du canal d'admission.

Des moyens de guidage de la plaque secondaire peuvent être prévus pour que la plaque secondaire se déplace parallèlement à elle-même lorsque le volet est pivoté.

La paroi du canal d'admission peut présenter une face plate sur laquelle vient en appui la secondaire plaque.

Le dispositif d'admission peut comprendre une plaque fixe de séparation disposée dans le canal d'admission et divisant l'écoulement en deux sections, l'axe de pivotement de la plaque principale du volet étant placé juste en amont de cette plaque de séparation.

Les extrémités de l'axe de pivotement de la plaque principale peuvent être placées dans des orifices prévus entre une culasse et un bloc de répartition.

La présente invention a également pour objet un procédé de fonctionnement d'un moteur à combustion interne comprenant au moins un canal d'admission pour amener un mélange combustible dans au moins une chambre de combustion.

Selon l'invention, on peut choisir, dans une partie longitudinale du canal d'admission, soit un écoulement dans deux sections de ce canal d'écoulement, de part et d'autre d'une plaque fixe de séparation et d'un volet situé dans le prolongement de cette plaque fixe de séparation, et comprenant une plaque principale (11) montée pivotante et une plaque secondaire (13) montée pivotante sur la plaque principale, soit un écoulement dans l'une desdites sections, l'autre section étant obstruée par ladite plaque principale, ladite plaque secondaire étant en appui contre une face de la paroi du canal d'admission.

Un moteur à combustion interne va maintenant être décrit à titre d'exemple non limitatif et illustré par le dessin sur lequel :
- la figure 1 représente une coupe partielle d'un moteur, dans un plan vertical contenant l'axe d'un canal d'admission, dans une position d'ouverture totale du canal d' admission ;
- la figure 2 représente une coupe selon II-II de la figure 1, transversalement audit canal d'admission ;
- la figure 3 représente une coupe partielle du moteur, selon la figure 1, dans une position d'ouverture totale du canal d'admission ; et
- la figure 4 représente une coupe selon IV-IV de la figure 3, transversalement audit canal d'admission.

Un moteur à combustion interne 1, illustré sur les figures, comprend un dispositif d'admission 2 qui détermine un canal d'admission 3, approximativement de section circulaire ou carrée à grands coins arrondis, qui est aménagé dans une culasse 4 et un bloc répartiteur 5 accolé à la culasse 3 par un plan de joint 6 qui coupe le canal d'admission 3.

Le canal d'admission 3 débouche dans une chambre de combustion 7, via un passage terminal 8 dans lequel est installée une soupape d'admission commandée.

Le canal d'admission 3 est destiné à amener un mélange d'air et d'un combustible jusqu'à la chambre de combustion 7.

Le canal d'admission 3 présente une partie rectiligne traversant le plan de joint 6 et inclinée en direction de la chambre de combustion 7, tandis que sa partie terminale débouchant dans la chambre de combustion 7 est légèrement recourbée vers le bas.

Le dispositif d'admission 2 comprend un volet pivotant 10 installé dans la partie rectiligne du canal d'admission 3.

Le volet pivotant 10 comprend une plaque principale 11 qui est portée par un axe transversal de pivotement 12 placé approximativement à mi-hauteur du canal d'admission 3 et dont les extrémités sont engagées dans des orifices aménagés entre la culasse 4 et le répartiteur 5, dans le plan de joint 6, et comprend une plaque secondaire d'extrémité 13 montée pivotante sur la plaque principale 11 par l'intermédiaire d'un axe transversal de pivotement 14 parallèle à l'axe de pivotement 12.

L'axe transversal de pivotement 12 peut être relié à un organe d'entraînement en rotation 15.

Le dispositif d'admission 2 comprend en outre, dans sa partie rectiligne, une plaque fixe longitudinale de séparation 16, qui est disposée ou formée dans le canal d'admission 3 et qui divise ce dernier en deux sections d'écoulement, dont une section d'écoulement supérieure 3a et une section d'écoulement inférieure 3b.

L'axe transversal de pivotement 12 de la partie principale 11 du volet 10 est situé juste en amont du bord transversal amont 16a de la plaque fixe de séparation 16.

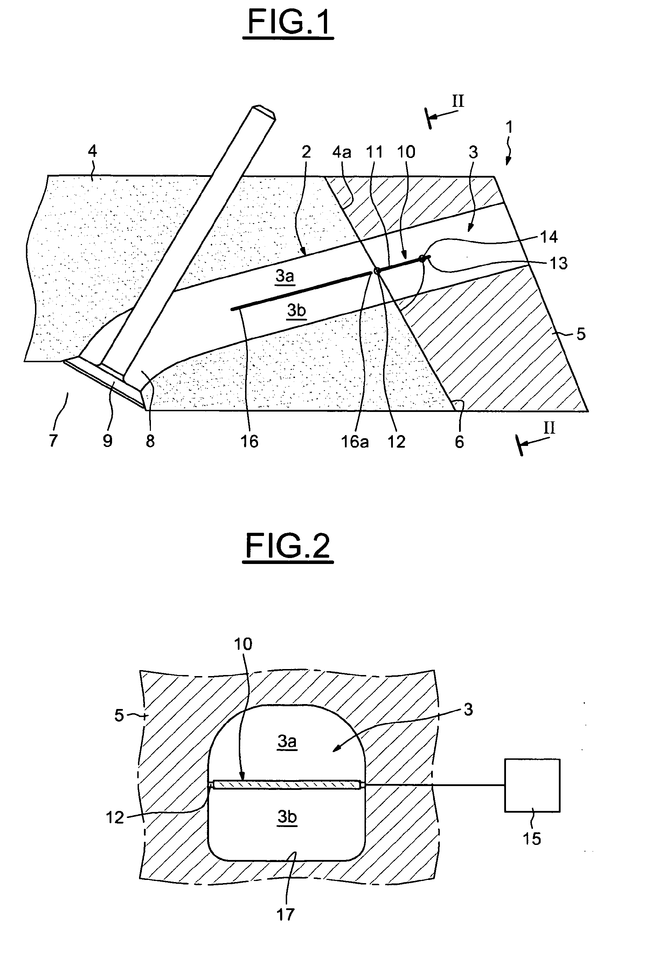

Comme le montre la figure 2, lorsque le volet pivotant 10 est dans une position d'ouverture, la plaque principale 11 et la plaque secondaire 13 s'étendent vers l'amont, dans le prolongement de la plaque fixe de séparation et dans le prolongement l'une de l'autre. Le canal d'admission 3 est alors divisé en deux sections d'écoulement, dont une section d'écoulement supérieure 3a et une section d'écoulement inférieure 3b.

Dans cette position d'ouverture, l'écoulement peut se produire librement dans le canal d'admission 3, en passant par la section d'écoulement supérieure 3a et la section d'écoulement inférieure 3b.

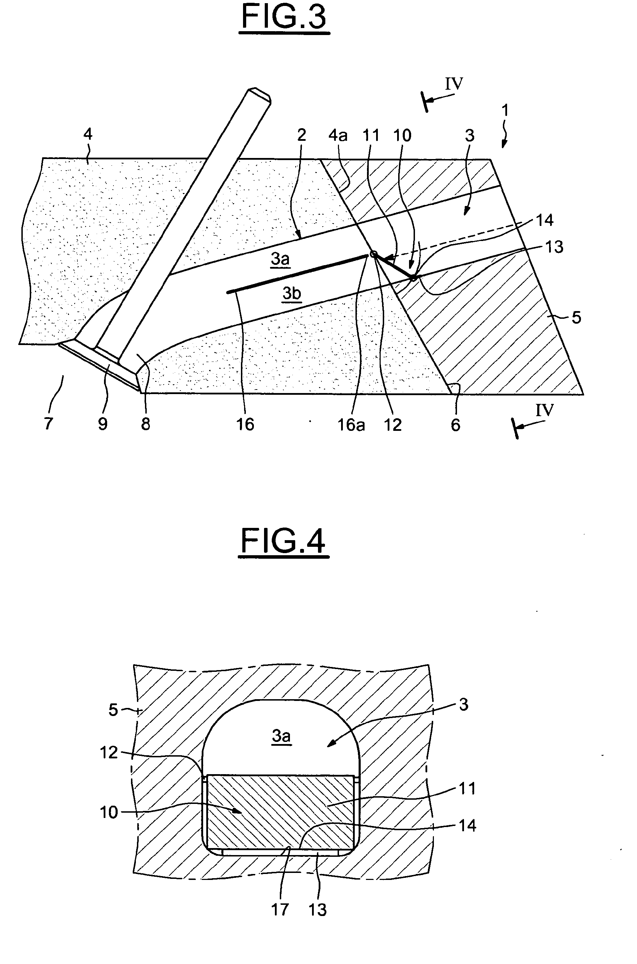

Comme le montre la figure 4, lorsque le volet pivotant 10 est dans une position de fermeture partielle, sa plaque principale 11 est rabattue vers le bas, jusqu'à une face inférieure plate 17 de la paroi du canal d'admission 3, tandis que sa partie secondaire 13 est orientée vers l'amont et prend appui sur cette face inférieure 17. La plaque principale 11 du volet pivotant 10 obstrue substantiellement la section d'écoulement inférieure 3b du canal d'admission 3, la plaque secondaire contribuant à l'étanchéité.

Avantageusement, la plaque principale 11 du volet 10, en position de fermeture partielle, peut être inclinée, depuis son axe de pivotement 12, vers l'amont par rapport à la direction du canal d'admission.

Dans cette position de fermeture partielle, l'écoulement dans le canal d'admission 3 se produit librement en amont de la zone dans laquelle se trouve le volet 10, puis est dévié par le volet 10 vers la section d'écoulement supérieure 3a, puis se produit uniquement dans cette section d'écoulement supérieure 3a, au-dessus de la plaque fixe de séparation 16, puis vers la chambre de combustion 7.

Selon l'exemple représenté, la section d'écoulement inférieure 3b est approximativement rectangulaire, de telle sorte que la plaque principale 11 et la plaque secondaire 13 peuvent être approximativement rectangulaires.

Lorsque l'organe d'entraînement en rotation 15 actionne le volet pivotant 10 pour le faire pivoter entre sa position d'ouverture et sa position de fermeture partielle décrites ci-dessus, il est avantageux que la partie secondaire 13 du volet pivotant 10 se déplace parallèlement à elle-même. Pour cela, le dispositif d'admission 3 peut comprendre des moyens de guidage adaptés pour que l'axe 14 soit libre en translation et pas en rotation.

Il résulte de ce qui précède qu'il est possible de choisir, soit un écoulement dans la section totale du canal d'admission 3 lorsque le volet 10 est dans sa position d'ouverture, soit un écoulement dans la section réduite 3a du canal d'admission 3 lorsque le volet 10 est dans sa position de fermeture partielle.

Un tel choix permet d'agir sur ou de modifier l'aérodynamique et la perméabilité du canal d'admission 3 en fonction de différents paramètres de fonctionnement du moteur, comme par exemple son régime et sa charge.

Par exemple, on choisira plutôt un écoulement dans la section totale du canal d'admission 3 lorsque le moteur est en pleine charge et à haut régime et on choisira plutôt un écoulement dans la section réduite 3a du canal d'admission 3 lorsque le moteur est en pleine charge et à bas régime ou en charges partielles avec forte dilution.

La présente invention ne se limite pas aux exemples ci-dessus décrits. Bien d'autres variantes de réalisation sont possibles, sans sortir du cadre défini par les revendications annexées.

## Revendications

1. Moteur à combustion interne comprenant un dispositif d'admission qui présente un canal d'admission pour amener un mélange combustible dans une chambre de combustion et qui comprend un volet pivotant disposé dans le canal d'admission, **caractérisé par le fait que** ledit volet (10) comprend une plaque principale (11) montée pivotante selon un axe de pivotement (12) transversal au canal d'admission (3) et une plaque secondaire d'extrémité (13) montée pivotante sur la plaque principale selon un axe (14) parallèle à l'axe de pivotement de la plaque principale ; ledit volet pouvant être déplacé entre une position d'ouverture et une position de fermeture partielle du canal d'admission telles que, dans la position d'ouverture, la plaque principale et la plaque secondaire s'étendent dans le prolongement l'une de l'autre parallèlement à la direction du canal d'admission et divisent ce dernier en deux sections d'écoulement, et, dans la position de fermeture partielle, la plaque principale obstrue l'une de ces sections d'écoulement et la plaque secondaire vient en appui contre la paroi du canal d'admission.

2. Moteur selon la revendication 1, dans lequel ledit volet (10), en position d'ouverture, s'étend vers l'amont.

3. Moteur selon l'une des revendications 1 et 2, dans lequel la plaque principale (11) dudit volet, en position de fermeture partielle, est inclinée, depuis son axe de pivotement, vers l'amont par rapport à la direction du canal d'admission.

4. Moteur selon l'une quelconque des revendications précédentes, comprenant des moyens de guidage de la plaque secondaire (13) adaptés pour que la plaque secondaire se déplace parallèlement à elle-même lorsque le volet est pivoté.

5. Moteur selon l'une quelconque des revendications précédentes, dans lequel la paroi du canal d'admission présent une face plate (17) sur laquelle vient en appui la plaque secondaire (13).

6. Moteur selon l'une quelconque des revendications précédentes, comprenant une plaque fixe de séparation (16) disposée dans le canal d'admission (3) et divisant l'écoulement en deux sections (3a, 3b), l'axe de pivotement (12) de la plaque principale (11) du volet étant placé juste en amont de cette plaque fixe de séparation (16).

7. Moteur selon l'une quelconque des revendications précédentes, dans lequel les extrémités de l'axe de pivotement (12) de la plaque principale (11) sont placées dans un orifice formé entre une culasse (4) et un bloc répartiteur (5).

8. Procédé de fonctionnement d'un moteur à combustion interne comprenant au moins un canal d'admission (3) pour amener un mélange combustible dans au moins une chambre de combustion, dans lequel on choisit, dans une partie longitudinale du canal d'admission, soit un écoulement dans deux sections (3a, 3b) de ce canal d'écoulement, de part et d'autre d'une plaque fixe de séparation (10) et d'un volet situé dans le prolongement de cette plaque fixe de séparation et comprenant une plaque principale (11) montée pivotante et une plaque secondaire (13) montée pivotante sur la plaque principale, soit un écoulement dans l'une (3a) desdites sections, l'autre section (3b) étant obstruée par ladite plaque principale (11), ladite plaque secondaire (13) étant en appui contre une face (17) de la paroi du canal d'admission.

## Claims

1. Internal combustion engine comprising an admission device that features an admission passage for feeding a combustible mixture into a combustion chamber and that comprises a pivoting flap disposed in the admission passage, **characterized in that** said flap (10) comprises a principal plate (11) mounted to pivot about a pivot axis (12) transverse to the admission passage (3) and a secondary or end plate (13) mounted to pivot on the principal plate about an axis (14) parallel to the pivot axis of the principal plate, said flap being movable between an open position and a partially closed position of the admission passage such that, in the open position, the principal plate and the secondary plate are in line with each other parallel to the direction of the admission passage and divide the latter into two flow sections and, in the partially closed position, the principal plate blocks one of these flow sections and the secondary plate comes to bear against the wall of the admission passage.

2. Engine according to Claim 1, wherein said flap (10), in the open position, extends in the upstream direction.

3. Engine according to either one of Claims 1 and 2, wherein the principal plate (11) of said flap, in the partially closed position, is inclined, from its pivot axis, in the upstream direction relative to the direction of the admission passage.

4. Engine according to any one of the preceding claims, comprising means for guiding the secondary plate (13) adapted so that the secondary plate is moved parallel to itself when the flap is pivoted.

5. Engine according to any one of the preceding claims, wherein the wall of the admission passage features a flat face (17) on which the secondary plate (13) comes to bear.

6. Engine according to any one of the preceding claims, comprising a fixed separator plate (16) disposed in the admission passage (3) and dividing the flow into two sections (3a, 3b), the pivot axis (12) of the principal plate (11) of the flap being placed just upstream of this fixed separator plate (16).

7. Engine according to any one of the preceding claims, wherein the ends of the pivot axis (12) of the principal plate (11) are placed in an orifice formed between a cylinder head (4) and a distributor unit (5).

8. Method of operating an internal combustion engine comprising at least one admission passage (3) for feeding a combustible mixture into at least one combustion chamber, in which there is a choice, in a longitudinal portion of the admission passage, between flow in two sections (3a, 3b) of this flow passage, on either side of a fixed separation plate (10) and a flap situated in line with this fixed separation plate and comprising a principal plate (11) that is pivotally mounted and a secondary plate (13) pivotally mounted on the principal plate, and flow in one section (3a), the other section (3b) being blocked by said principal plate (11), said secondary plate (13) bearing against a face (17) of the wall of the admission passage.

## Patentansprüche

1. Verbrennungsmotor, der eine Ansaugvorrichtung enthält, die einen Ansaugkanal aufweist, um ein brennbares Gemisch in einen Brennraum zu lenken, und die eine im Ansaugkanal angeordnete Schwenkklappe enthält, **dadurch gekennzeichnet, dass** die Klappe (10) eine Hauptplatte (11), die gemäß einer Schwenkachse (12) quer zum Ansaugkanal (3) schwenkbar montiert ist, und eine sekundäre Endplatte (13) enthält, die auf die Hauptplatte gemäß einer Achse (14) parallel zur Schwenkachse der Hauptklappe schwenkbar montiert ist; wobei die Klappe zwischen einer Öffnungsstellung und einer teilweisen Schließstellung des Ansaugkanals verschoben werden kann, die so sind, dass die Hauptplatte und die Sekundärplatte sich in der Öffnungsstellung in der gegenseitigen Verlängerung parallel zur Richtung des Ansaugkanals erstrecken und diesen in zwei Strömungsabschnitte teilen, und die Hauptplatte in der teilweisen Schließstellung einen dieser Strömungsabschnitte verschließt und die Sekundärplatte gegen die Wand des Ansaugkanals in Auflage kommt.

2. Motor nach Anspruch 1, bei dem die Klappe (10) sich in der Öffnungsstellung nach vorne erstreckt.

3. Motor nach einem der Ansprüche 1 und 2, bei dem die Hauptplatte (11) der Klappe in der teilweisen Schließstellung ausgehend von ihrer Schwenkachse bezüglich der Richtung des Ansaugkanals nach vorne geneigt ist.

4. Motor nach einem der vorhergehenden Ansprüche, der Führungseinrichtungen der Sekundärplatte (13) enthält, die geeignet sind, damit die Sekundärplatte sich parallel zu sich selbst verschiebt, wenn die Klappe geschwenkt wird.

5. Motor nach einem der vorhergehenden Ansprüche, bei dem die Wand des Ansaugkanals eine flache Seite (17) aufweist, auf der die Sekundärplatte (13) in Auflage kommt.

6. Motor nach einem der vorhergehenden Ansprüche, der eine ortsfeste Trennplatte (16) enthält, die im Ansaugkanal (3) angeordnet ist und die Strömung in zwei Abschnitte (3a, 3b) teilt, wobei die Schwenkachse (12) der Hauptplatte (11) der Klappe direkt vor dieser ortsfesten Trennplatte (16) angeordnet ist.

7. Motor nach einem der vorhergehenden Ansprüche, bei dem die Enden der Schwenkachse (12) der Hauptplatte (11) in einer Öffnung angeordnet sind, die zwischen einem Zylinderkopf (4) und einem Verteilerblock (5) geformt ist.

8. Betriebsverfahren eines Verbrennungsmotors, der mindestens einen Ansaugkanal (3) zum Lenken eines brennbaren Gemischs in mindestens einen Brennraum enthält, bei dem in einem Längsbereich des Ansaugkanals entweder eine Strömung in zwei Abschnitten (3a, 3b) dieses Strömungskanals zu beiden Seiten einer ortsfesten Trennplatte (10) und einer Klappe, die sich in der Verlängerung dieser ortsfesten Trennplatte befindet und eine schwenkbar montierte Hauptplatte (11) und eine auf die Hauptplatte schwenkbar montierte Sekundärplatte (13) enthält, oder eine Strömung in einem (3a) der Abschnitte gewählt wird, während der andere Abschnitt (3b) von der Hauptplatte (11) verschlossen wird, wobei die Sekundärplatte (13) gegen eine Seite (17) der Wand des Ansaugkanals in Auflage ist.
